# EUROPEAN PATENT APPLICATION

(11) **EP 4 838 213 A1**
(43) Date of publication of application: **11.11.2026**
(21) Application number: 25174755.6
(22) Date of filing: 07.05.2025
(51) Int. Cl.: G01N 29/14, G01N 29/44

(54) **ANOMALY DETECTION BASED ON MACHINE LEARNING**

(71) Applicant: Harman Becker Automotive Systems GmbH, 76307 Karlsbad (DE)
(72) Inventor: Meng, Fanyu, 85764 Oberschleissheim (DE); von Türckheim, Friedrich, 22587 Hamburg (DE)
(74) Representative: Kraus & Lederer PartGmbB

(57) **Abstract**

Techniques for determining a presence of one or more anomalies associated with a device under test are provided. The presence of the one or more anomalies is determined by processing at least one features associated with one or more acoustic signals associated with the device under test using a trained machine learning algorithm (or neural network). The at least one features are extracted or determined by processing the one or more acoustic signals.

## Description

### Technical Field

Various examples of the disclosure generally pertain to anomaly detection, e.g., for an end-of-line quality control or a machine health monitoring procedure. Various examples of the disclosure specifically pertain to a method for determining, using a trained machine learning algorithm, a presence of one or more anomalies associated with a device under test based on at least one features associated with one or more acoustic signals associated with the device under test.

### Background

Anomaly detection is widely used in the automotive, aerospace, consumer electronics, transportation, and white goods industries. For example, anomaly detection is used in end-of-line quality control (EOLQC), e.g. for loudspeakers, and machine health monitoring (MHM) such as for mechanical components of a car such as bearings, actuators, transmissions, motors, or engines. Assuring the quality of products is critical before the products come off the production lines and get delivered to the customers. EOLQC has been introduced to guarantee normal units can pass, and anomaly units are detected. MHM refers to the process of monitoring a piece of equipment during operation to identify any significant changes that could indicate a developing failure.

Data acquisition sensors and feature extraction are the two important elements of anomaly detection. Sensors are deployed on production lines or in/next to machines to acquire data, which is the source information for the later quality check or anomaly detection, from a device under test (DUT). Features are then extracted from the data acquired by the sensors, and they are used as indicators to differentiate between normal and anomaly products or conditions.

However, practical difficulties lie in both sensor deployment and feature extraction. It is sometimes time-consuming or even impossible to attach one sensor or even multiple sensors, e.g., accelerometers and torque sensors, to the DUT, especially when the DUT rotates or moves. Contactless approaches, e.g. using optical or acoustical sensors, save mounting effort. But optical sensors, e.g. cameras and laser vibrometers, are usually expensive.

Feature extraction is widely considered in the industry as one of the most challenging tasks in anomaly detection. A particular symptom requires to extract/determine one or more features. When a new symptom appears, new features are demanded. It can take up to months to find meaningful and relevant features to detect one symptom, and sometimes it can be impossible to detect anomalies by using individual features or simple combinations of several features.

### Summary

Therefore, a need exists for advanced techniques for anomaly detection, e.g., for an end-of-line quality control or a machine health monitoring procedure. Specifically, a need exists for conveniently and efficiently determining, predicting, or detecting a presence of one or more anomalies associated with a device under test, e.g., a manufactured unit at the end of an assembly line or an operating machine.

This need is met by the features of the independent claims. The features of the dependent claims define embodiments.

A computer-implemented method is provided. The method comprises obtaining one or more acoustic signals associated with a device under test. The method further comprises extracting, based on the one or more acoustic signals, at least one features associated with the one or more acoustic signals. The method also comprises determining, using a trained machine learning algorithm, a presence of one or more anomalies associated with the device under test based on the at least one features.

A computer program product or a computer program or a computer-readable storage medium including program code is provided. The program code can be executed by at least one processor. Executing the program code causes the at least one processor to perform a method. The method comprises obtaining one or more acoustic signals associated with a device under test. The method further comprises extracting, based on the one or more acoustic signals, at least one features associated with the one or more acoustic signals. The method also comprises determining, using a trained machine learning algorithm, a presence of one or more anomalies associated with the device under test based on the at least one features.

A computing or processing device comprising at least one processor and a memory is provided. Upon loading and executing program code from the memory, the at least one processor is configured to perform a method. The method comprises obtaining one or more acoustic signals associated with a device under test. The method further comprises extracting, based on the one or more acoustic signals, at least one features associated with the one or more acoustic signals. The method also comprises determining, using a trained machine learning algorithm, a presence of one or more anomalies associated with the device under test based on the at least one features.

A computer-implemented method for performing a training of a machine learning algorithm is provided. The method comprises obtaining one or more training acoustic signals associated with each of at least one instance of a device under test. The method further comprises for each of the at least one instance of the device under test, extracting at least one features associated with the one or more training acoustic signals, determining, using the machine learning algorithm, a prediction of a presence of one or more anomalies associated with a respective instance of the device under test based on the at least one features, and updating parameter values of the machine learning algorithm based on a comparison between the prediction and a corresponding reference of the presence of the one or more anomalies associated with the respective instance of the device under test.

A computer program product or a computer program or a computer-readable storage medium including program code is provided. The program code can be executed by at least one processor. Executing the program code causes the at least one processor to perform a method for performing a training of a machine learning algorithm. The method comprises obtaining one or more training acoustic signals associated with each of at least one instance of a device under test. The method further comprises for each of the at least one instance of the device under test, extracting at least one features associated with the one or more training acoustic signals, determining, using the machine learning algorithm, a prediction of a presence of one or more anomalies associated with a respective instance of the device under test based on the at least one features, and updating parameter values of the machine learning algorithm based on a comparison between the prediction and a corresponding reference of the presence of the one or more anomalies associated with the respective instance of the device under test.

A computing or processing device comprising at least one processor and a memory is provided. Upon loading and executing program code from the memory, the at least one processor is configured to perform a method for performing a training of a machine learning algorithm. The method comprises obtaining one or more training acoustic signals associated with each of at least one instance of a device under test. The method further comprises for each of the at least one instance of the device under test, extracting at least one features associated with the one or more training acoustic signals, determining, using the machine learning algorithm, a prediction of a presence of one or more anomalies associated with a respective instance of the device under test based on the at least one features, and updating parameter values of the machine learning algorithm based on a comparison between the prediction and a corresponding reference of the presence of the one or more anomalies associated with the respective instance of the device under test.

It is to be understood that the features mentioned above and those yet to be explained below may be used not only in the respective combinations indicated, but also in other combinations or in isolation without departing from the scope of the invention.

### Brief description of the Drawings

FIG. 1 schematically illustrates an exemplary scenario of an end-of-line quality control of a loudspeaker.
FIG. 2 schematically illustrates an exemplary scenario of machine health monitoring of a motor.
FIG. 3 is a flowchart of a method according to various examples.
FIG. 4 is a flowchart of a further method according to various examples.
FIG. 5 schematically illustrates an exemplary work flow according to various examples.
FIG. 6 is a block diagram of a device according to various examples.

### Detailed description

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the disclosure will be described in detail with reference to the accompanying drawings. It is to be understood that the following description of embodiments is not to be taken in a limiting sense. The scope of the disclosure is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various examples of the disclosure generally pertain to a method for determining a presence of one or more anomalies associated with a device under test. The presence of the one or more anomalies is determined by processing at least one features associated with one or more acoustic signals associated with the device under test using a trained machine learning algorithm (or neural network). The at least one features are extracted or determined by processing the one or more acoustic signals.

According to this disclosure, the device under test may comprise any device, machine, or equipment having the functionality to emit or generate sound waves such as a motor or engine, a loudspeaker, a television, a car, a smartphone, and so on.

In general, the one or more acoustic signals associated with the device under test can be acquired or recorded by one or more acoustic sensors such as microphones, piezoelectric sensors, or hydrophones. For example, the one or more acoustic sensors may be positioned close to or next to the device under test. There is no need to attach the sensors to the DUT, so it guarantees fast data acquisition. Further, the techniques disclosed herein can facilitate and be used for anomaly detection in scenarios in which it is impossible to attach one or more sensors to the device under test. In addition, acoustic sensors are of low cost. If multiple acoustic sensors such as an array of multiple acoustic sensors are positioned, array signal processing techniques can be enabled to restrict, reduce, or filter out environmental noises and improve the signal-to-noise ratio (SNR) of the one or more acoustic signals associated with the device under test.

According to various examples, the one or more acoustic signals may be acquired at an end of an assembly/production line to enable an end-of-line quality control of the device under test.

Alternatively, the one or more acoustic signals may be acquired during a machine health monitoring procedure associated with the device under test.

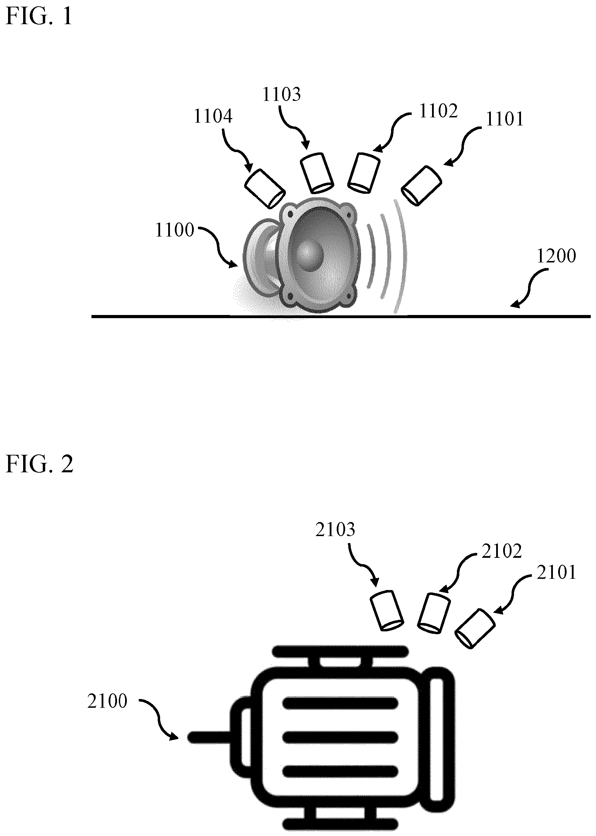

FIG. 1 schematically illustrates an exemplary scenario of an end-of-line quality control of a loudspeaker 1100 at the end of a production line 1200. Four acoustic sensors 1101, 1102, 1103, and 1104 are positioned at the end of the production line 1200 and configured to test finished loudspeakers to ensure they meet the required quality standards before being packaged, shipped, or delivered to customers. The four acoustic sensors 1101, 1102, 1103, and 1104 can be configured to acquire one or more acoustic signals emitted or generated by the loudspeaker 1100, which can be processed using a trained machine learning algorithm deployed in a computing device (not shown in FIG. 1) to determine a presence of one or more anomalies associated with the loudspeaker 1100. For instance, the trained machine learning algorithm can automatically flag loudspeakers that deviate from expected behaviour.

FIG. 2 schematically illustrates an exemplary scenario of machine health monitoring of a motor 2100, for example, when the motor 2100 is running. Three acoustic sensors 2101, 2102, and 2103 are positioned close to or next to the motor 2100 and configured to acquire one or more acoustic signals emitted or generated by the motor, which can be processed using a trained machine learning algorithm deployed in a computing device (not shown in FIG. 2) to determine a presence of one or more anomalies associated with the motor 2100. For instance, the trained machine learning algorithm can automatically predict potential failures and prevent unplanned downtime based on the determined a presence of one or more anomalies.

According to this disclosure, the at least one features associated with the one or more acoustic signals may comprise at least one of a spectrogram, one or more short-time Fourier transform coefficients, one or more Mel-frequency cepstral coefficients.

According to various examples, the (trained) machine learning algorithm may comprise at least one of a convolutional neural network, a recurrent neural network, a transformer-based neural network, and a convolutional recurrent neural network.

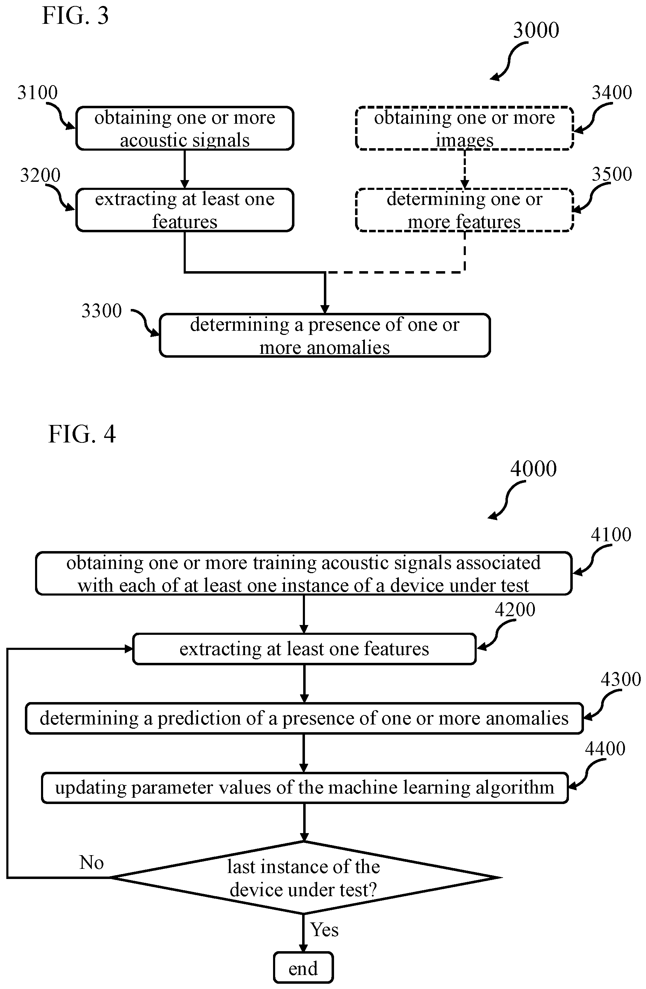

FIG. 3 is a flowchart of a method 3000 according to various examples. The method 3000 pertains to determining a presence of one or more anomalies associated with a device under test, e.g., a headphone, a smartphone, a loudspeaker, an engine, a motor, or a car. The presence of the one or more anomalies is determined by processing, using a trained machine learning algorithm, at least one features associated with one or more acoustic signals. The at least one features is extracted based on the one or more acoustic signals. The one or more acoustic signals is associated with the device under test, e.g., being generated or emitted by the device under test.

Optional blocks are labelled with dashed lines.

The method 3000 may be executed by a computing device comprising at least one processor upon loading program code. The computing device may be embedded in or connected with the device under test such as the loudspeaker 1100 of FIG. 1 or the motor 2100 of FIG. 2. Details of the method 3000 are described below.

Block 3100: obtaining one or more acoustic signals associated with a device under test.

The one or more acoustic signals could be loaded from a database or obtained or acquired directly from one or more acoustic sensors such as the acoustic sensors 1101 to 1104 of FIG. 1 or the acoustic sensors 2101 to 2103 of FIG. 2. Block 3010 could include controlling the one or more acoustic sensors to acquire the one or more acoustic signals. The one or more acoustic signals could be loaded from a memory. Alternatively, the one or more acoustic signals may be received directly from one or more acoustic sensors during an end-of-line quality control or a machine health monitoring to perform a real-time determination of a presence of one or more anomalies associated with the device under test.

According to various examples, the one or more acoustic signals may be acquired using an array of multiple acoustic sensors and the method 3000 may further comprise processing the one or more acoustic signals using at least one of array signal processing algorithms. Said extracting of the at least one features may be based on the processed one or more acoustic signals.

For example, the array signal processing algorithms may comprise at least one of noise cancellation, echo cancellation, source separation, signal enhancement, beamforming, and source localization.

By using an array of multiple acoustic sensors and array signal processing algorithms, higher-quality acoustic signals can be obtained and the determination of the presence of one or more anomalies can be facilitated.

Block 3200: extracting, based on the one or more acoustic signals, at least one features associated with the one or more acoustic signals.

According to various examples, the at least one features may comprise at least one of a spectrogram, one or more short-time Fourier transform coefficients, one or more Mel-frequency cepstral coefficients.

For example, the spectrogram associated with the one or more acoustic signals may be determined or extracted as follows: breaking each of the one or more acoustic signals into small chunks, e.g., 20 ms, 30 ms, or 50 ms per chunk; applying short-time Fourier transform to each chunk to obtain spectrogram of each chunk. Then, the spectrogram associated with the one or more acoustic signals can be obtained based on spectrograms of all chunks.

In general, short-time Fourier transform coefficients are complex numbers having magnitude and phase which describe the frequency content at different time points. The one or more short-time Fourier transform coefficients associated with each of the one or more acoustic signals may be extracted or determined as follows: selecting a window size, e.g., 256, 512, or 1024 samples; moving the window across each of the one or more acoustic signals; for each windowed chunk, applying the Fourier Transform and obtaining the complex Fourier Transform results, i.e., the short-time Fourier transform coefficients.

In general, Mel-frequency cepstral coefficients are coefficients that collectively make up a Mel-frequency cepstrum. They are derived from a type of cepstral representation of an audio clip (a nonlinear "spectrum-of-a-spectrum"). Mel-frequency cepstral coefficients are commonly derived as follows: taking the Fourier transform of (a windowed excerpt of) a signal; mapping the powers of the spectrum obtained above onto the mel scale, using triangular overlapping windows or alternatively, cosine overlapping windows; taking the logs of the powers at each of the mel frequencies; taking the discrete cosine transform of the list of mel log powers, as if it were a signal. The MFCCs are the amplitudes of the resulting spectrum.

Alternatively, additionally, or optionally, the at least one features may comprise at least one of a root mean square value, a peak value, a crest factor, an autocorrelation function, a coherence, a periodicity, a synchronous average, and so on.

Block 3300: determining, using a trained machine learning algorithm, a presence of one or more anomalies associated with the device under test based on the at least one features.

According to various examples, the (trained) machine learning algorithm, e.g., a neural network, may have an encoder-decoder structure, such as U-net as disclosed in a non-patent literature - Ronneberger, Olaf, Philipp Fischer, and Thomas Brox. "U-net: Convolutional networks for biomedical image segmentation." International Conference on Medical image computing and computer-assisted intervention. Springer, Cham, 2015. For example, the neural network may be fed with the at least one features and output yes (having one or more anomalies) or no (not having any anomalies).

Additionally or optionally, said determining of the presence of one or more anomalies may be further based on one or more features associated with one or more images depicting the device under test such as the loudspeaker 1100 of FIG. 1 or the motor 2100 of FIG. 2. The method 3000 may further comprise the following two blocks 3400 and 3500.

Block 3400: obtaining one or more images depicting the device under test.

For example, the one or more images may be acquired or recorded nearly simultaneously with the one or more acoustic signals obtained at block 3100. Thus, behaviours of the device under test may be shown using both one or more acoustic signals and one or more images and thereby the determination of the presence of one or more anomalies can be more accurate and reliable.

According to various examples, the one or more images could be loaded from a database or obtained or acquired directly from one or more imaging sensors which are positioned together with one or more acoustic sensors such as the acoustic sensors 1101 to 1104 of FIG. 1 or the acoustic sensors 2101 to 2103 of FIG. 2. Block 3400 and block 3100 could be executed at the same time, e.g., upon receiving a control signal or a trigger from a control device configured to perform an end-of-line quality control or a machine health monitoring. The one or more images could be loaded from a memory. Alternatively, the one or more images may be received directly from one or more imaging sensors during an end-of-line quality control or a machine health monitoring to perform a real-time determination of a presence of one or more anomalies associated with the device under test.

Block 3500: determining, based on the one or more images, one or more features associated with the one or more images.

According to various examples, the one or more features associated with the one or more images may be determined using rule-based techniques such as Sobel and/or Canny edge detection techniques, Harris corner detector, Local Binary Patterns, and Gabor filters. Alternatively or additionally, the one or more features associated with the one or more images may be determined using machine learning techniques such as an encoder.

According to various examples, before applying the trained machine learning algorithm to the at least one features associated with the one or more acoustic signals to determine the presence of one or more anomalies associated with the device under test, the machine learning algorithm may be trained by updating trainable parameters and hyperparameters of the machine learning algorithm.

According to the disclosure, various training methods of machine learning algorithms or neural networks may be applied to train the machine learning algorithm, such as supervised learning, unsupervised learning, semi-supervised learning, reinforce learning and etc.

In general, the (trained) machine learning algorithm may be executed by a node of an edge computing system, or by a cloud computing system, or by a computing device connectable to one or more acoustic sensors such as the acoustic sensors 1101 to 1104 of FIG. 1 or the acoustic sensors 2101 to 2103 of FIG. 2. For example, the computing device may be embedded into or connected to the production line 1200 of FIG. 1 or the motor 2100 of FIG. 2.

According to various examples, the machine learning algorithm may comprise an encoder and decoder. The encoder and the decoder of the machine learning algorithm may be trained separately using different sets of training data based on supervised learning techniques. Each training process can include determining a loss value based on a comparison between a prediction of the respective one of the encoder and the decoder and a ground truth. A loss function can provide the loss value by performing the comparison. Based on the loss value, it is then possible to adjust the weights of the encoder and the decoder, respectively. Here, an optimization algorithm, e.g., gradient descent, can be employed. Backpropagation can be an alternative.

On the other hand, the encoder and the decoder of the machine learning algorithm may be trained jointly, i.e., the encoder and the decoder may be regarded as a whole, and parameter values of both the encoder and the decoder are updated together by using, for example, backpropagation in a joint optimization process based on a common loss value. This corresponds to end-to-end training.

According to various examples, each of the encoder and the decoder of the machine learning algorithm may be trained using different training techniques, respectively. For example, the encoder may be trained by using supervised learning, and the decoder may be trained by using unsupervised learning.

FIG. 4 is a flowchart of a method 4000 according to various examples. The method 4000 pertains to performing a training of a machine learning algorithm, e.g., the machine learning algorithm used in the method 3000 of FIG. 3 . The method 4000 utilizes supervised learning. Details of the method 4000 are described below.

Block 4100: obtaining one or more training acoustic signals associated with each of at least one instance of a device under test.

For example, the one or more training acoustic signals associated with each of at least one instance of a device under test may be obtained from a database. The one or more training acoustic signals may be acquired at an end of an assembly line to enable an end-of-line quality control of the at least one instance of the device under test.

According to various example, for an end-of-line quality control, operations, e.g., a run-up of a motor with increasing revolutions per minute, or a sweep signal played by a loudspeaker with increasing frequency, may be executed on multiple instances of the device under test 1100 to generate sound to be captured by the sensors 1101 to 1104 of FIG. 1.

Alternatively, the one or more training acoustic signals are acquired during a respective machine health monitoring procedure associated with the respective instance of the device under test.

According to various examples, for machinery health monitoring, installed instances of the device under test may be recorded with different operations, e.g., a run-up of a motor with increasing revolutions per minute.

According to various examples, one or more training acoustic signals associated with each of multiple instances of the device under test may be obtained. All the training acoustic signals may be divided into multiple batches and each batch may comprise one or more training acoustic signals associated with an individual instance of the device under test. During each or an individual iteration of the training process of the machine learning algorithm, one or more batches of the training acoustic signals may be used.

According to this disclosure, for each of the at least one instance of the device under test, the method 4000 comprises the following Blocks 4200, 4300, and 4400.

Block 4200: extracting at least one features associated with the one or more training acoustic signals.

The same techniques described at Block 3200 of the method 3000 could be applied at Block 4200.

Block 4300: determining, using the machine learning algorithm, a prediction of a presence of one or more anomalies associated with a respective instance of the device under test based on the at least one features.

The same techniques described at Block 3300 of the method 3000 could be applied at Block 4300.

Block 4400: updating parameter values of the machine learning algorithm based on a comparison between the prediction and a corresponding reference of the presence of the one or more anomalies associated with the respective instance of the device under test.

According to various examples, each of the corresponding references of the presence of the one or more anomalies associated with the respective instance of the device under test may be determined by experts.

According various examples, the one or more training acoustic signals are obtained when each of the at least one instance of the device under test is functional. I.e., the machine learning algorithm may be trained only using training acoustic signals associated with the device under test without any anomalies, i.e., normal acoustic signals.

Similar to the method 3000 of FIG. 3, the method 4000 may further comprise obtaining one or more training images depicting each of the at least one instance of the device under test; and for each of the at least one instance of the device under test, determining, based on the one or more training images, one or more features associated with the one or more training images. Said determining of the prediction of the presence of the one or more anomalies may be further based on the one or more features associated with the one or more training images.

Optionally or additionally, similar to the method 3000 of FIG. 3, the one or more training acoustic signals associated with the respective instance of the device under test may be acquired using an array of multiple acoustic sensors and the method 4000 may further comprise processing the one or more training acoustic signals using at least one of array signal processing algorithms. Said extracting of the at least one features may be based on the processed one or more training acoustic signals.

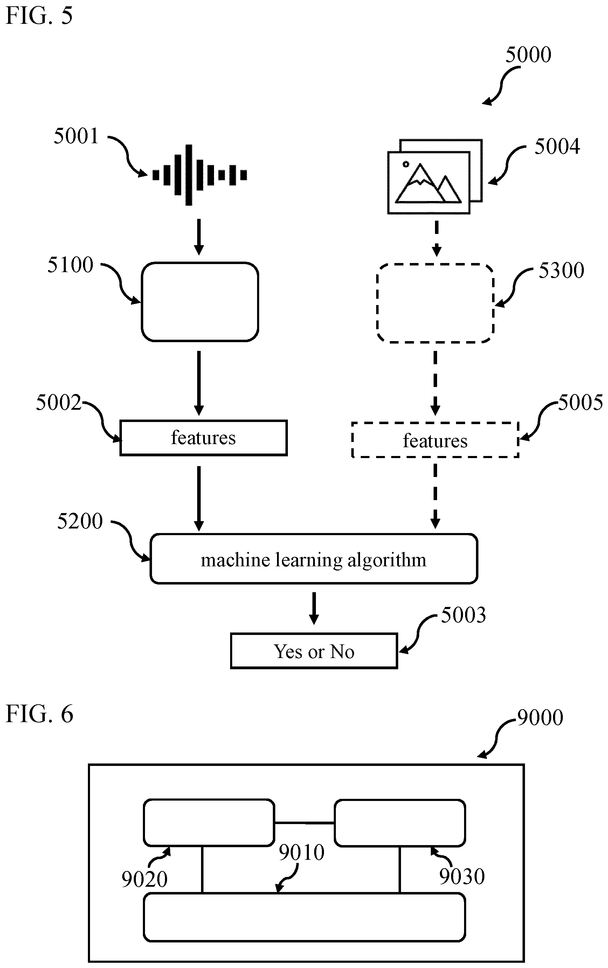

FIG. 5 schematically illustrates an exemplary work flow 5000 according to various examples. The work flow 5000 pertains to determining a presence 5003 of one or more anomalies associated with a device under test, e.g., a headphone, a smartphone, a loudspeaker, a motor, an engine, or a car. The presence 5003 of the one or more anomalies is determined by processing, using a trained machine learning algorithm 5200, at least one features 5002 associated with one or more acoustic signals 5001, and optionally one or more features 5005 associated with one or more images 5004 depicting the device under test. The at least one features 5002 is extracted at 5100 based on the one or more acoustic signals 5001, e.g., using the same techniques described at Block 3200 of FIG. 3. The one or more features 5005 may be determined at 5300 based on the one or more images 5004, e.g., using the same techniques described at Block 3500 of FIG. 3. The one or more acoustic signals 5001 is associated with the device under test, e.g., being generated or emitted by the device under test. The one or more images 5004 may be acquired or recorded nearly simultaneously with the one or more acoustic signals 5001 using one or more imaging sensors.

FIG. 6 is a block diagram of a computing device 9000 according to various examples. The computing device 9000 may comprise a processor 9020, a memory 9030, and an input/output interface 9010. The processor 9020 is configured to load program code from the memory 9030 and execute the program code. Upon executing the program code, the processor 9020 performs the method 3000 for determining a presence of one or more anomalies associated with a device under test and/or the method 4000 for performing a training of a machine learning algorithm, e.g., the machine learning algorithm used in the method 3000.

Referring to FIG. 1 or FIG. 2 again, the production line 1200 or the motor 2100 may further comprise the computing device 9000 configured to perform the method 3000 and/or the method 4000. The computing device 9000 may be embedded in or connected with the production line 1200 or the motor 2100, and thereby the production line 1200 or the motor 2100 may be also configured to perform the method 3000 and/or the method 4000.

Summarizing, techniques have been described that facilitate fully automatic, precise, and reliable identification, determination, detection of a presence of one or more anomalies associated with a device under test, e.g., a headphone, a smartphone, a loudspeaker, a motor, an engine, or a car. By using one or more acoustic sensors, contactless anomaly detection can be facilitated. By using an array of multiple acoustic sensors and array signal processing algorithms, higher-quality acoustic signals can be obtained and the determination of the presence of one or more anomalies can be facilitated. Basic features, e.g. spectrogram, short-time Fourier transform coefficients, Mel-frequency cepstral coefficients are extracted and processed by a trained machine learning algorithm, efforts and time for exploring features can be reduced. The machine learning algorithm may be trained only using training acoustic signals associated with the device under test without any anomalies, i.e., normal acoustic signals, and thereby low demand on datasets is required. By combining audio signals with images (or videos) captured by imaging sensors, the determination of the presence of one or more anomalies can be more accurate and reliable.

According to various examples, basic features, e.g. spectrogram, short-time Fourier transform (STFT) coefficients, Mel-frequency cepstral coefficients (MFCCs) are extracted, which are very basic audio features that can be easily calculated. It is not necessary to investigate dedicated features for detecting particular symptoms. The features are then fed to a machine learning algorithm, using such as convolutional neural network or recurrent neural network, for training. Once the machine learning algorithm's parameters are determined, it can be used for anomaly detection. For an end-of-line quality control, the detection is performed device under test by device under test as the product units pass on the production line, i.e. multiple instances of the device under test are measured and the features are extracted, and then the features are fed into the machine learning algorithm and thus labelled as normal or anomaly. For machine health monitoring, the continuous recording of a device under test is truncated into samples, and features extracted from these samples are continuously fed into the machine learning algorithm for anomaly condition detection.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

## Claims

1. A computer-implemented method (3000), the method (3000) comprising:
- obtaining (3100) one or more acoustic signals associated with a device under test;
- extracting (3200), based on the one or more acoustic signals, at least one features associated with the one or more acoustic signals;
- determining (3300), using a trained machine learning algorithm, a presence of one or more anomalies associated with the device under test based on the at least one features.

2. The computer-implemented method (3000) of claim 1, further comprising:
- obtaining (3400) one or more images depicting the device under test;
- determining (3500), based on the one or more images, one or more features associated with the one or more images;
wherein said determining of the presence of one or more anomalies is further based on the one or more features associated with the one or more images.

3. The computer-implemented method (3000) of claim 1 or 2,
wherein the one or more acoustic signals are acquired using an array of multiple acoustic sensors;
the method (3000) further comprising:
- processing the one or more acoustic signals using at least one of array signal processing algorithms;
wherein said extracting of the at least one features is based on the processed one or more acoustic signals.

4. The computer-implemented method (3000) of any one of the preceding claims,
wherein the at least one features comprises at least one of a spectrogram, one or more short-time Fourier transform coefficients, one or more Mel-frequency cepstral coefficients.

5. The computer-implemented method (3000) of any one of the preceding claims,
wherein the trained machine learning algorithm comprises at least one of a convolutional neural network and a recurrent neural network.

6. The computer-implemented method (3000) of any one of the preceding claims,
wherein the one or more acoustic signals are acquired at an end of an assembly line to enable an end-of-line quality control of the device under test; or
wherein the one or more acoustic signals are acquired during a machine health monitoring procedure associated with the device under test.

7. A computer-implemented method (4000) for performing a training of a machine learning algorithm, the method (4000) comprising:
- obtaining (4100) one or more training acoustic signals associated with each of at least one instance of a device under test;
- for each of the at least one instance of the device under test:
- extracting (4200) at least one features associated with the one or more training acoustic signals;
- determining (4300), using the machine learning algorithm, a prediction of a presence of one or more anomalies associated with a respective instance of the device under test based on the at least one features; and
- updating (4400) parameter values of the machine learning algorithm based on a comparison between the prediction and a corresponding reference of the presence of the one or more anomalies associated with the respective instance of the device under test.

8. The computer-implemented method (4000) of claim 7,
wherein the one or more training acoustic signals are obtained when each of the at least one instance of the device under test is functional.

9. The computer-implemented method (4000) of claim 7 or 8, further comprising:
- obtaining one or more training images depicting each of the at least one instance of the device under test;
- for each of the at least one instance of the device under test:
- determining, based on the one or more training images, one or more features associated with the one or more training images;
wherein said determining of the prediction of the presence of the one or more anomalies is further based on the one or more features associated with the one or more training images.

10. The computer-implemented method (4000) of any one of claims 7 to 9,
wherein the one or more training acoustic signals associated with the respective instance of the device under test are acquired using an array of multiple acoustic sensors;
the method further comprising:
- processing the one or more training acoustic signals using at least one of array signal processing algorithms;
wherein said extracting of the at least one features is based on the processed one or more training acoustic signals.

11. The computer-implemented method (4000) of any one of claims 7 to 10,
wherein the at least one features comprises at least one of a spectrogram, one or more short-time Fourier transform coefficients, one or more Mel-frequency cepstral coefficients.

12. The computer-implemented method (4000) of any one of claims 7 to 11,
wherein the machine learning algorithm comprises at least one of a convolutional neural network and a recurrent neural network.

13. The computer-implemented method (4000) of any one of claims 7 to 12,
wherein the one or more training acoustic signals are acquired at an end of an assembly line to enable an end-of-line quality control of the at least one instance of the device under test; or
wherein the one or more training acoustic signals are acquired during a respective machine health monitoring procedure associated with the respective instance of the device under test.

14. A computing device (9000), the device comprising a processor and a memory, wherein upon loading and executing program code from the memory, the processor is configured to perform the method (3000, 4000) of any one of the preceding claims.

15. An assembly line or a machine, wherein the assembly line or the machine comprises the computing device of claim 14.
